# EUROPEAN PATENT SPECIFICATION

(11) **EP 3 925 801 B1**
(45) Date of publication and mention of the grant of the patent: **31.07.2024**
(21) Application number: 20754994.0
(22) Date of filing: 12.02.2020
(51) Int. Cl.: B60C 13/02, B60C 11/01, B29C 33/00, B29D 30/06

(54) **TIRE**
REIFEN
PNEU

(30) Priority: 12.02.2019 JP 2019022985
(43) Date of publication of application: 22.12.2021
(73) Proprietor: BRIDGESTONE CORPORATION, Chuo-ku Tokyo 104-8340 (JP)
(72) Inventor: OGAWA Yuya, Tokyo 104-8340 (JP)
(74) Representative: Marks & Clerk LLP
(86) International application number: PCT/JP2020/005335
(87) International publication number: WO 2020/166606

(56) References cited:
- EP-A1- 0 726 174
- JP-A- 2004 291 937
- JP-A- 2010 012 666
- JP-A- 2010 260 378
- JP-A- 2012 162 203
- JP-A- 2012 176 703
- JP-A- 2014 189 087
- JP-A- 2015 024 722
- JP-A- 2015 212 117
- JP-A- 2016 088 338
- JP-A- 2016 113 100
- JP-A- 2016 198 999
- JP-A- 2017 065 383
- JP-B2- 5 478 293

## Description

### [Technical Field]

The present invention relates to a tire capable of suppressing the occurrence of a failure in the vicinity of the outer end of the tire width direction of a belt layer.

### [Background Art]

Conventionally, in a pneumatic tire (hereinafter abbreviated as tire) having a belt layer on the inner side of a tire radial direction of a tread contacting a road surface, various measures have been taken to prevent the occurrence of a failure in the vicinity of the outer end of the tire width direction of the belt layer.

For example, in a tire having a belt layer including a pair of crossing belts and a spiral belt having a cord extending to the tire circumferential direction, a method is known for optimizing the positions of the outer ends of the tire width direction of the crossing belts and the spiral belts, and the elastic modulus of the cords forming the crossing belts (see Patent Literature JP 2008-143347).

According to such tire, it is possible to effectively suppress failures at the outer edge of the tire width direction of belt layer, specifically cracks in the surface portion of the tire, without impairing the steering stability of the high-performance using the spiral belt.

JP2012162203 discloses a pneumatic tire and a tire molding die for preventing a vulcanization failure. The pneumatic tire is vulcanization molded by using the tire molding die having a sector mold for molding a tread section, and a side plate for molding a sidewall section. When a tire section molded by the connection section between a tire molding face of the sector mold and the tire molding face of the side plate is called as a sector end molded section, the pneumatic tire includes a projection section extending from the sector end molded section to the inside in the tire width direction along the tread face.

Other known tires are disclosed in the documents JP 2004291937 A and JP 2016113100 A.

### [Summary of Invention]

However, it has been found that even in the tire in which the measures for preventing the occurrence of the failure in the vicinity of the outer edge of the tire width direction of the belt layer are taken as described above, the occurrence of the failure may not necessarily be effectively suppressed under more severe conditions of use.

Specifically, in a situation where a large shear strain is generated in the belt layer due to a high road surface temperature and a large input to the tire, a failure as described above may occur.

Accordingly, an object of the present invention is to provide a tire that can more reliably prevent the occurrence of a failure in the vicinity of the outer edge of the tire width direction of the belt layer even when the road surface temperature is high and the input to the tire is large.

According to a first aspect of the invention there is provided a tire as specified in claim 1. Also disclosed is a tire (pneumatic tire 10) including a tread (tread 20) contacting the road surface and a tire side portion (tire side portion 30) continuous to the tread and positioned inside a tire radial direction of the tread, including a belt layer (belt layer 50) provided inside the tire radial direction of the tread, a carcass (carcass 40) provided inside a tire radial direction of the belt layer. A longitudinal protrusion portion (longitudinal ridges 110) extending along the tire radial direction and projecting outward from a surface of the tire side portion toward an outside of a tire width direction, a plurality of the longitudinal protrusion portions are provided along a tire circumferential direction, a tire radial direction inner end (tire radial direction inner end 110 a) of the longitudinal protrusion portion is located outside the tire width direction than a maximum width position (maximum width position Wmax) of the tire side portion in the tire width direction, a tire radial direction outer end (tire radial direction outer end 110 b) of the longitudinal protrusion portion passes through a tire width direction outer end of the belt layer and is positioned outside the tire radial direction than a second straight line (line L2) orthogonal to a first straight line (line L1) parallel to the tire radial direction, and the second straight line is orthogonal to the first straight line at a position where the first straight line contacts a tire radial direction outer end of the carcass.

### [Brief Description of Drawings]

FIG. 1 is a cross-sectional view of a pneumatic tire 10.
FIG. 2 is an enlarged sectional view of a portion of the pneumatic tire 10.
FIG. 3 is an enlarged sectional view of a portion of the pneumatic tire 10 (including a communication ridge 200).
FIG. 4 is a partial side view of the pneumatic tire 10.
FIG. 5 is a diagram schematically showing a cross section of the pneumatic tire 10 and a cross section of a mold 300 used in a vulcanization molding process of the pneumatic tire 10.
FIG. 6 is a cross-sectional view of a longitudinal ridge 110 along line F6-F6 of FIG. 4.
FIG. 7 is a cross-sectional view of a circumferential ridge 120 along line F7-F7 of FIG. 4.

### [Description of Embodiments]

Embodiments will be described below with reference to the drawings. The same functions and configurations are denoted by the same or similar reference numerals, and descriptions thereof are omitted as appropriate.

### (1)Overall structure of tire

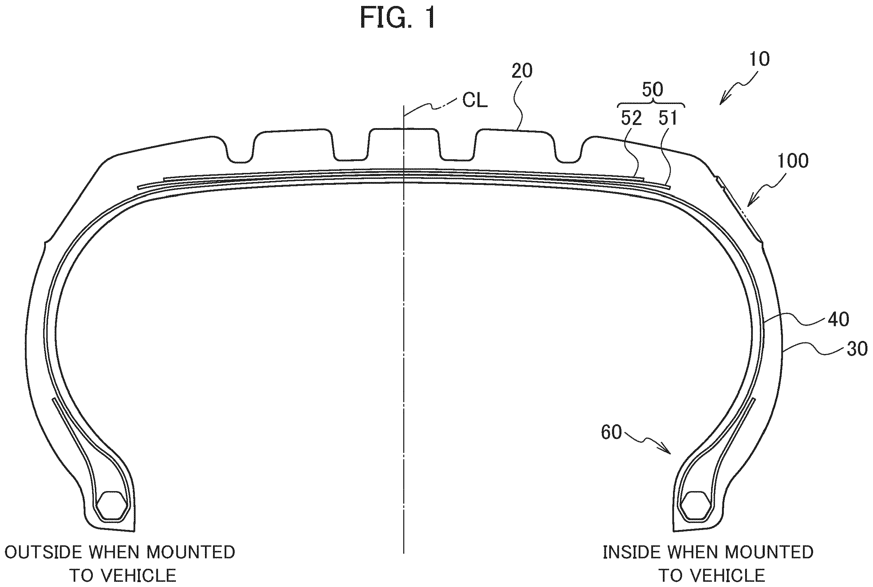

FIG. 1 is a sectional view of the pneumatic tire 10 according to the present embodiment. Specifically, FIG. 1 is a cross-sectional view of the pneumatic tire 10 taken along tire width direction and tire radial direction. In FIG. 1, the sectional hatching is not shown (hereinafter the same).

The pneumatic tire 10 can be used for a standard four-wheel passenger vehicle, and can be suitably used for a high-performance automobile having particularly high vehicle dynamics.

As shown in FIG. 1, the pneumatic tire 10 includes a tread 20, a tire side portion 30, a carcass 40, a belt layer 50 and a bead portion 60.

The tread 20 is a portion in contact with the road surface. On the tread 20, a pattern (not shown) is formed according to the usage environment of the pneumatic tire 10 and the type of vehicle to be mounted.

The tire side portion 30 is continuous with the tread 20 and positioned inside the tire radial direction of the tread 20. The tire side portion 30 is an area from the tire width direction outer end of the tread 20 to the upper end of the bead portion 60. The tire side portion 30 is sometimes referred to as a sidewall.

The carcass 40 forms the skeleton of the pneumatic tire 10. The carcass 40 is provided inside the tire radial direction of the belt layer 50.

The carcass 40 has a radial structure in which a carcass cord (not shown) arranged radially along a tire radial direction is covered with a rubber material. However, the present invention is not limited to a radial structure, and a bias structure in which the carcass cord crosses the tire radial direction may be used.

The belt layer 50 is provided inside the tire radial direction of the tread 20. The belt layer 50 includes a pair of crossing belts, specifically, a crossing belt 51 (a first crossing belt) and a crossing belt 52 (a second crossing belt). The crossing belt 52 is provided outside the tire radial direction of the crossing belt 51.

The crossing belt 51 and the crossing belt 52 have a belt cord (not shown). In a tread surface view, the belt cord of the crossing belt 51 crosses the belt cord of the crossing belt 52.

The belt layer 50 may include a reinforcing belt (not shown) provided outside the tire radial direction of the crossing belt 52. The reinforcing belt includes, for example, a spiral belt having a cord extending to the tire circumferential direction. The spiral belt may have a width similar to that of the crossing belt 51 and the crossing belt 52, or may have a shape covering only the outer end portions of the tire width direction of the crossing belt 51 and the crossing belt 52.

The bead portion 60 is continuous with the tire side portion 30 and is located inside the tire radial direction of the tire side portion 30. The bead portion 60 is locked to a rim wheel (not shown).

As shown in FIG. 1, the pneumatic tire 10 has a generally symmetrical shape with respect to the tire equatorial line CL, but a ridge portion 100 is provided only on one side of the tire width direction.

Specifically, the ridge portion 100 is provided only on the tire side portion 30, which is positioned inside when the tire is mounted to the vehicle. That is, the mounting direction of the pneumatic tire 10 is designated, and the ridge portion 100 is not provided on the tire side portion 30, which is positioned outside when the tire is mounted to the vehicle.

The ridge portion 100 is projected outward from the surface of the tire side portion 30 toward the outside of the tire width direction. In FIG. 1, the shape of the ridge portion 100 is shown by an imaginary line.

### (2)Structure of the ridge portion 100

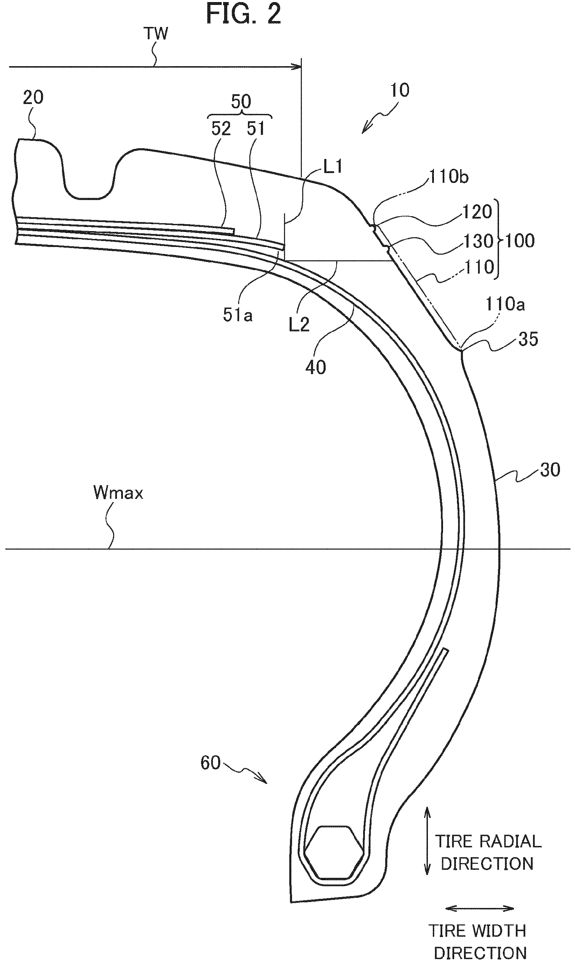

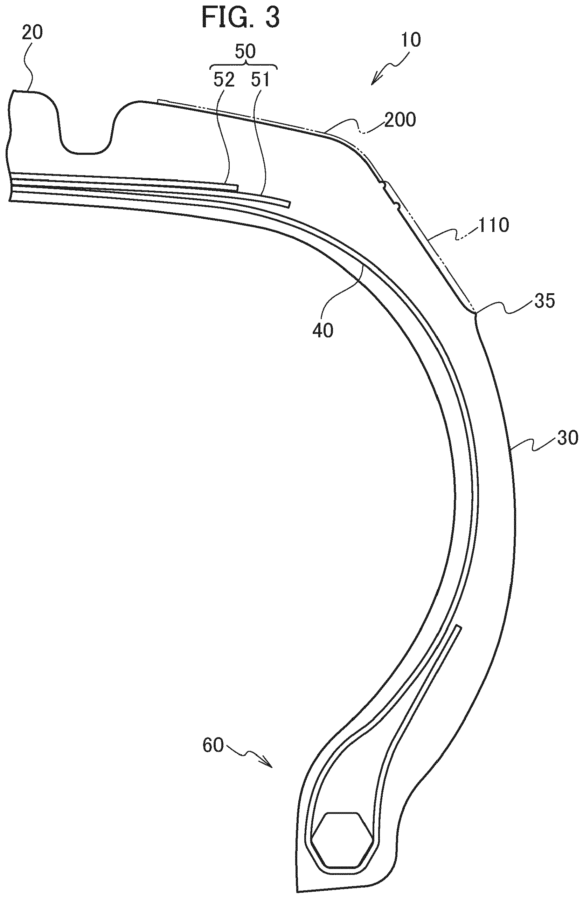

FIGs. 2 and 3 are partially enlarged sectional views of the pneumatic tire 10.

Specifically, FIG. 2 shows the shape of the ridge portion 100 at a position where only the ridge portion 100 is provided in the tire circumferential direction by an imaginary line.

In FIG. 3, an imaginary shows the shapes of the ridge portion 100 and a communication ridge 200 at a position where the ridge portion 100 and the communication ridge 200 connected to the ridge portion 100 are provided in the tire circumferential direction.

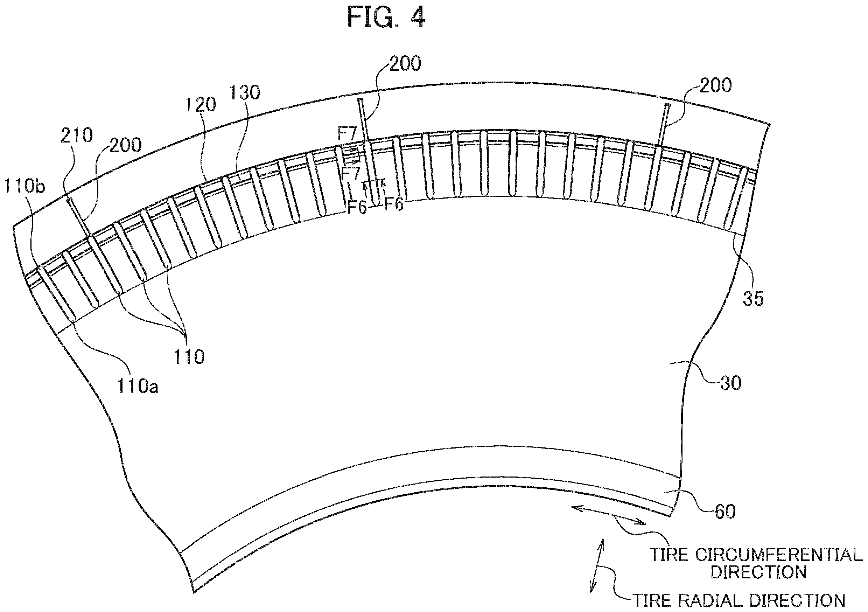

FIG. 4 is a partial side view of the pneumatic tire 10.

As shown in FIGs. 2 to 4, the ridge portion 100 is configured by a set of a plurality of protrusion portions extending along the tire radial direction and a plurality of protrusion portions extending along the tire circumferential direction.

Specifically, the ridge portion 100 includes a plurality of longitudinal ridges 110 extending along the tire radial direction, and a circumferential ridge 120 and a circumferential ridge 130 extending along the tire circumferential direction. In this embodiment, the longitudinal ridge 110 constitutes a longitudinal protrusion portion.

The longitudinal ridge 110 is projected from the surface of the tire side portion 30 toward the outside of the tire width direction. Specifically, the longitudinal ridges 110 are ridges that protrude outward from the tire side portion 30 toward the tire width direction.

A plurality of longitudinal ridges 110 are provided along the tire circumferential direction. In this embodiment, the longitudinal ridges 110 are provided at equal intervals in the tire circumferential direction, specifically, at intervals of 2 degrees. That is, 180 longitudinal ridges 110 are provided.

Note that the intervals need not necessarily be equal, and may be other than 2 degrees, but in consideration of the function of the longitudinal ridges 110, 160 to 220 ridges are provided in the tire circumferential direction.

Further, although it is preferable that the longitudinal ridge 110 is provided in the entire area of the tire circumferential direction, the longitudinal ridge 110 may not be provided in a part of the area of the tire circumferential direction.

The tire radial direction inner end 110 a of the longitudinal ridge 110 is located outside in the tire radial direction beyond the maximum width position Wmax in the tire width direction of the tire side portion 30.

The tire radial direction outer end 110 b of the longitudinal ridge 110 passes through the tire width direction outer end of the belt layer 50 and is positioned outside the tire radial direction than a straight line L2 orthogonal to a straight line L1 parallel to the tire radial direction.

That is, the straight line L2 is parallel to the tire width direction. The straight line L2 is a straight line orthogonal to the straight line L1 at a position where the straight line L1 contacts the tire radial direction outer end of the carcass 40.

The tire radial direction outer end 110 b of the longitudinal ridge 110 is positioned inside the tire radial direction than the grounding end of a ground surface TW in the tire width direction of the tread 20. That is, the tire radial direction outer end 110 b of the longitudinal ridge 110 does not enter the ground surface TW.

The ground surface means a ground contact portion with the road surface of the tread 20 in a state where the pneumatic tire 10 is mounted to the vehicle. In addition, the vehicle, to which the pneumatic tire 10 is mounted, means a vehicle that is ready for operation (including occupants, fuel, etc.).

Alternatively, the ground surface TW may assume that the pneumatic tire 10 is set to a normal internal pressure and a normal load is applied thereto.

The normal internal pressure is the air pressure corresponding to the maximum load capacity in the JATMA (Japan Automobile Tire Manufacturers Association) YearBook, and the normal load is the maximum load capacity (maximum load) corresponding to the maximum load capacity in the JATMA YearBook. In addition, it is set in ETRTO in Europe, TRA in the U.S., and tire standards in other countries.

In this embodiment, the tire radial direction inner end 110 a of the longitudinal ridge 110 is located outside the tire radial direction than a tire radial direction inner end 51 a (see FIG. 2) of the crossing belt 51. The tire radial direction inner end of the crossing belt 51 means the inner surface of the tire radial direction of the crossing belt 51.

In the present embodiment, as described above, the ridge portion 100 including the longitudinal ridge 110 is provided only on the inside tire side portion 30 when the pneumatic tire 10 is mounted to the vehicle.

The circumferential ridges 120 and 130 are annular projections extending along the tire circumferential direction. Specifically, the circumferential ridges 120 and 130 are projected toward the outside of the tire width direction from the surface of the tire side portion 30. Similar to the longitudinal ridges 110, the circumferential ridges 120 and 130 are ridge-shaped protrusion portions that are projected toward the outside of the tire width direction from the surface of the tire side portion 30.

The circumferential ridge 120 is provided outside the tire radial direction than the circumferential ridge 130. A plurality of longitudinal ridges 110 cross the circumferential ridge 120 and the circumferential ridge 130.

In this embodiment, the thickness (width) of the longitudinal ridge 110 is larger (wider) than the circumferential ridges 120 and 130.

On the inner side of the tire radial direction of the ridge 100, specifically, the longitudinal ridge 110, a swollen portion 35 is formed which swells from the surface of the tire side portion 30 to the outer side of the tire width direction.

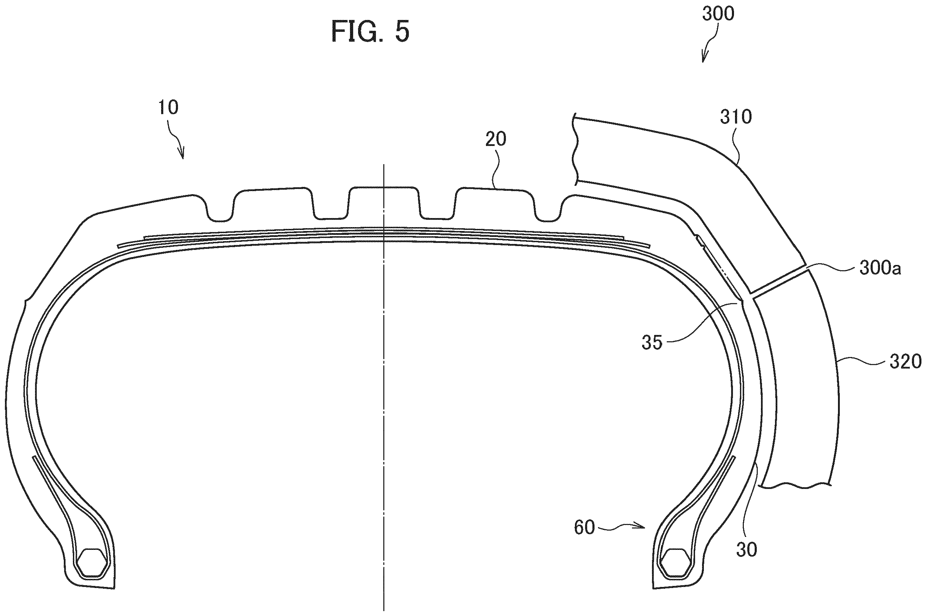

The swollen portion 35 corresponds to a dividing position 300 a of a vulcanizing mold (mold 300 (see FIG. 5)) used when the raw tire is vulcanization-molded to manufacture the pneumatic tire 10. The relationship between the dividing position 300 a and the swollen portion 35 will be described later.

Some of the longitudinal ridges 110 are communicated with a communication ridge 200 (see FIGs. 3 and 4). The communication ridge 200 is provided over a shoulder part of the tread 20 from the tire side portion 30. The communicating ridges 200 are ridges raised from the surfaces of the tread 20 and the tire side portion 30.

In this embodiment, the communication ridge 200 is provided for each of ten longitudinal ridges 110 in the tire circumferential direction.

The communication ridge 200 is a protrusion portion formed on the surfaces of the tread 20 and the tire side portion 30 as a result of forming a passage for venting in the vulcanization molding process of the pneumatic tire 10. For this reason, in the communication ridge 200, a circular vent mark 210 is formed corresponding to the position of a vent hole (not shown) formed in the mold 300 (see FIG. 5).

FIG. 5 schematically shows a cross section of the pneumatic tire 10 and a cross section of the mold 300 used in the vulcanization molding process of the pneumatic tire 10.

As shown in FIG. 5, the mold 300 includes a tread ring 310 and a side mold 320. A plurality of tread rings 310 are provided along the tire circumferential direction. The tread ring 310 is also referred to as a sector mold. The tread ring 310 mainly molds a part of the surface of the tread 20.

The side mold 320 is an annular mold which mainly forms the surface of the tire side portion 30 and the bead portion 60.

Thus, the mold 300 is divided into a tread ring 310 and a side mold 320 in tire radial direction. Specifically, the mold 300 is divided into a tread ring 310 and a side mold 320 at the division position 300 a.

For this reason, at the division position 300 a, as described above, a swollen portion 35 is formed which swells from the surface of the tire side portion 30 to the outside of the tire width direction.

The division position 300 a (that is, the position of the swollen portion 35) is located outside the tire radial direction from the maximum width position Wmax (see FIG. 2).

As shown in FIGs. 2 to 4, the tire radial direction outer end 110 b of the longitudinal ridge 110 is located outside the division position 300 a in the tire radial direction of the mold 300 for molding the pneumatic tire 10, that is, the position of the swollen portion 35, and is located inside the tire radial direction than the straight line L2.

### (3)Cross-sectional shape of ridge portion 100

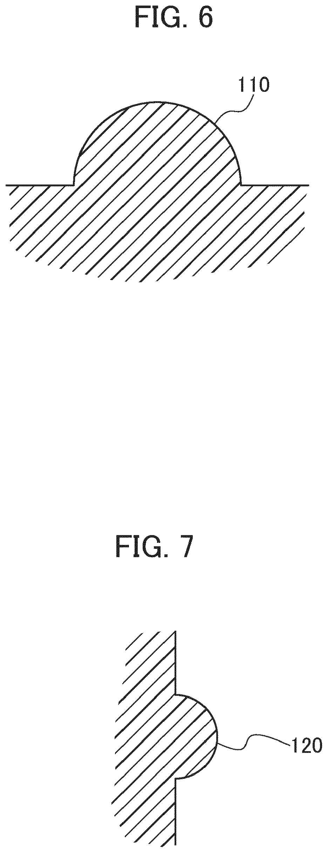

FIG. 6 is a sectional view of the longitudinal ridge 110 along line F6-F6 of FIG. 4. As shown in FIG. 6, the longitudinal ridge 110 has a semicircular cross-sectional shape along the tire circumferential direction and the tire width direction.

In this embodiment, the radius (R) of the longitudinal ridge 110 is 1 mm. That is, the width of the longitudinal ridge 110 along the tire circumferential direction is 2 mm.

FIG. 7 is a cross-sectional view of the circumferential ridge 120 along the line F7-F7 of FIG. 4. As shown in FIG. 7, the circumferential ridge 120 has a semicircular cross-sectional shape along the tire circumferential direction and the tire width direction. The circumferential ridge 130 also has a similar shape.

In this embodiment, the radius (R) of the circumferential ridge 120 is 0.5 mm. That is, the width of the circumferential ridge 120 along the tire circumferential direction is 1 mm. Therefore, as described above, the longitudinal ridge 110 is thicker (wider) than the circumferential ridges 120 and 130.

### (4)Function and effects

According to the embodiment described above, the following effects can be obtained. Specifically, in the tire circumferential direction, the pneumatic tire 10 is provided with the plurality of longitudinal ridges 110 extending along the tire radial direction and projecting outward from the surface of the tire side portion 30 in the tire width direction.

The tire radial direction inner end 110 a of the longitudinal ridge 110 is located outside in the tire radial direction beyond the maximum width position Wmax in the tire width direction of the tire side portion 30.

The tire radial direction outer end 110 b of the longitudinal ridge 110 is positioned outside the tire radial direction from the straight line L2 (see FIG. 2). That is, the tire radial direction outer end 110 b is located, in tire radial direction, near the tire width direction outer end of the belt layer 50.

The plurality of longitudinal ridges 110 provided in the tire circumferential direction generate turbulence in the vicinity of the tire width direction outer end of the belt layer 50 when the pneumatic tire 10 rolls. As a result, the tire side portion 30 near the tire width direction outer end of the belt layer 50 is effectively cooled.

Thus, even when the road surface temperature is high and the input to the pneumatic tire 10 is large, the occurrence of the failure in the vicinity of the tire width direction outer end of the belt layer 50 can be more surely prevented.

In this embodiment, the tire radial direction outer end 110 b of the longitudinal ridge 110 is located outside the tire radial direction than the tire radial direction inner end 51 a of the crossing belt 51. Therefore, the occurrence of the failure in the vicinity of the tire width direction outer end of the crossing belts included in the belt layer 50 can be effectively prevented.

In this embodiment, the tire radial direction outer end 110 b of the longitudinal ridge 110 is located outside the division position 300 a of the mold 300, that is, the position of the swollen portion 35, and is located inside the tire radial direction than the straight line L2. Therefore, the tire side portion 30 near tire width direction outer end of the belt layer 50 is cooled more effectively by the longitudinal ridge 110 having a fixed length in the tire radial direction. Thus, the occurrence of the failure can be more surely prevented.

In this embodiment, the longitudinal ridge 110 is provided only on the inside tire side portion 30 when the tire is mounted to the vehicle. In general, since a negative camber is imparted to the vehicle to which the pneumatic tire 10 is mounted, an input to the vicinity of the inside tire side portion 30 when mounted is likely to be particularly large.

Therefore, the inside tire side portion 30 can be effectively cooled when mounted, in which the failure is more likely to occur. Thus, the occurrence of the failure can be more surely prevented. When the longitudinal ridge 110 is provided on the outside tire side portion 30 when mounted, air resistance may be adversely affected depending on the type of the vehicle.

In the present embodiment, the cross section of the longitudinal ridge 110 along the tire circumferential direction and the tire width direction is semicircular. Therefore, it is less likely to be damaged than a ridge (protrusion) having a square cross section having a corner. Further, depending on an arrangement interval of the longitudinal ridges 110 in the tire circumferential direction, when 160 to 220 longitudinal ridges 110 are provided, a turbulent flow having a high cooling effect can be generated while suppressing damage by making the cross section semicircular.

### (5)Other embodiments

Although the contents of the present invention have been described above with reference to the examples, it will be obvious to those skilled in the art that the present invention is not limited to these descriptions and that various modifications and improvements are possible.

For example, in the above-described embodiment, the ridge portion 100 includes the circumferential ridge 120 and the circumferential ridge 130, but the circumferential ridge 120 and the circumferential ridge 130 are not essential.

The circumferential ridges 120 and 130 are formed as a result of air venting in the vulcanization molding process of the pneumatic tire 10, and may not be provided if air venting is possible by other methods. Similarly, the communication ridge 200 may not be provided if air can be discharged by other means.

In the above-described embodiment, the belt layer 50 is formed by only the pair of crossing belts 51 and 52, but the belt layer 50 may be formed by other than the crossing belts (for example, a spiral belt that replaces the crossing belts.).

Further, in the above-described embodiment, the width of the crossing belt 51 is wider than the width of the crossing belt 52, but the width of the crossing belt 52 may be wider than the width of the crossing belt 51.

In the above-described embodiment, the cross section of the longitudinal ridge 110 along the tire circumferential direction and the tire width direction is semicircular, but the cross section may be other than semicircular, for example, dome-shaped or mountain-shaped.

While embodiments of the invention have been described as above, it should not be understood that the statements and drawings which form part of this disclosure are intended to limit the invention. Various alternative embodiments, examples and operating techniques will become apparent to those skilled in the art from this disclosure.

### [Reference Signs List]

10 pneumatic tire
20 tread
30 tire side portion
35 swollen portion
40 carcass
50 belt layer
51 crossing belt
51 a tire radial direction inner end
52 crossing belt
60 bead portion
100 ridge portion
110 longitudinal ridge
110 a tire radial direction inner end
110 b tire radial direction outer end
120 circumferential ridge
130 circumferential ridge
200 communication ridge
210 vent mark
300 mold
300 a division position
310 tread ring
320 side mold

## Claims

1. A tire (10) including a tread (20) contacting the road surface and a tire side portion (30) continuous to the tread and positioned inside a tire radial direction of the tread, comprising:
a belt layer (50) provided inside the tread in the tire radial direction;
a carcass (40) provided inside the belt layer in the tire radial direction, wherein
a longitudinal protrusion portion (110) extending along the tire radial direction and projecting outward from a surface of the tire side portion toward an outside of a tire width direction;
160 to 220 of the longitudinal protrusion portions are provided along a tire circumferential direction;
a tire radial direction inner end (110a) of the longitudinal protrusion portion is located outside, in the tire radial direction, a maximum width position (Wmax) of the tire side portion in the tire width direction;
a tire radial direction outer end (110b) of the longitudinal protrusion portion is positioned outside, in the tire radial direction, a second straight line (L2) orthogonal to a first straight line (L1) passing through a tire width direction outer end of the belt layer and parallel to the tire radial direction,
the second straight line is orthogonal to the first straight line at a position where the first straight line contacts a tire radial direction outer end of the carcass; and
the tire radial direction outer end of the longitudinal protrusion portion is positioned inside the tire radial direction of a grounding end of a ground surface (TW) in the tire width direction of the tread.

2. The tire (10) according to claim 1, wherein the belt layer (50) includes a first crossing belt (51) and a second crossing belt (52) provided outside the first crossing belt in the tire radial direction, and
the tire radial direction outer end (110b) of the longitudinal protrusion portion (110) is located outside of the tire radial direction than a tire radial direction inner end of the first crossing belt.

3. The tire (10) according to claim 1 or 2, wherein the tire comprises a swollen portion (35) located outside the maximum width position (Wmax) in the tire radial direction, wherein the swollen portion corresponds to a division position (300a) of a mold (300) for molding the tire, the mold comprising a plurality of tread rings (310) and a side mold (320), wherein the plurality of tread rings are provided along the tire circumferential direction and the side mold is an annular mold, wherein the mold is divided into at least one of the plurality of tread rings and the side mold at the division position.

4. The tire (10) according to any one of claims 1 to 3, wherein the longitudinal protrusion portion (110) is provided only on the inside tire side portion (30) when the tire is mounted to a vehicle.

5. The tire (10) according to any one of claims 1 to 4, wherein a cross sectional shape of the longitudinal protrusion portion (110) along the tire circumferential direction is semicircular.

6. The tire (10) according to any preceding claim, further comprising:
circumferential ridges (120, 130) that are annular projections extending along the tire circumferential direction, and
a communication ridge (200) communicated with one or more of the longitudinal protrusion portions (110).

## Patentansprüche

1. Reifen (10) der eine Lauffläche (20), die die Straßenoberfläche berührt, und einen Reifenseitenabschnitt (30) einschließt, der kontinuierlich zu der Lauffläche ist und innerhalb einer Reifenradialrichtung der Lauffläche positioniert ist, Folgendes umfassend:
eine Gürtelschicht (50), die innerhalb der Lauffläche in der Reifenradialrichtung bereitgestellt ist;
eine Karkasse (40), die innerhalb der Gürtelschicht in der Reifenradialrichtung bereitgestellt ist, wobei
sich ein längs verlaufender Vorsprungsabschnitt (110) entlang der Reifenradialrichtung erstreckt und von einer Oberfläche des Reifenseitenabschnitts nach außen in Richtung einer Außenseite einer Reifenbreitenrichtung vorspringt;
160 bis 220 der längs verlaufenden Vorsprungsabschnitte entlang einer Reifenumfangsrichtung bereitgestellt sind;
ein in der Reifenradialrichtung inneres Ende (110a) des längs verlaufenden Vorsprungsabschnitts in der Reifenradialrichtung außerhalb einer maximalen Breitenposition (Wmax) des Reifenseitenabschnitts in der Reifenbreitenrichtung liegt,
ein in der Reifenradialrichtung äußeres Ende (110b) des längs verlaufenden Vorsprungsabschnitts in der Reifenradialrichtung außerhalb einer zweiten geraden Linie (L2) positioniert ist, die orthogonal zu einer ersten geraden Linie (L1) ist, die durch ein in der Reifenbreitenrichtung äußeres Ende der Gürtelschicht und parallel zu der Reifenradialrichtung verläuft,
die zweite gerade Linie zu der ersten geraden Linie an einer Position orthogonal ist, an der die erste gerade Linie ein äußeres Ende der Karkasse in der Reifenradialrichtung berührt; und
das in der Reifenradialrichtung äußere Ende des längs verlaufenden Vorsprungsabschnitts innerhalb der Reifenradialrichtung von einem erdenden Ende einer Bodenfläche (TW) in der Reifenbreitenrichtung der Lauffläche positioniert ist.

2. Reifen (10) nach Anspruch 1, wobei die Gürtellage (50) einen ersten kreuzenden Gürtel (51) und einen zweiten kreuzenden Gürtel (52) einschließt, der außerhalb des ersten kreuzenden Gürtels in der Reifenradialrichtung bereitgestellt ist, und
das in der Reifenradialrichtung äußere Ende (110b) des längs verlaufenden Vorsprungsabschnitts (110) außerhalb der Reifenradialrichtung als ein in der Reifenradialrichtung inneren Ende des ersten kreuzenden Gürtels liegt.

3. Reifen (10) nach Anspruch 1 oder 2, wobei der Reifen einen geschwollenen Abschnitt (35) umfasst, der außerhalb der maximalen Breitenposition (Wmax) in der Reifenradialrichtung liegt, wobei der geschwollene Abschnitt einer Teilungsposition (300a) einer Form (300) zum Formen des Reifens entspricht, wobei die Form eine Vielzahl von Laufflächenringen (310) und eine Seitenform (320) umfasst, wobei die Vielzahl von Laufflächenringen entlang der Reifenumfangsrichtung bereitgestellt ist und die Seitenform eine ringförmige Form ist, wobei die Form an der Teilungsposition in mindestens einen von der Vielzahl von Laufflächenringen und der Seitenform unterteilt ist.

4. Reifen (10) nach einem der Ansprüche 1 bis 3, wobei der längs verlaufende Vorsprungsabschnitt (110) nur an dem Reifeninnenseitenabschnitt (30) bereitgestellt ist, wenn der Reifen an einem Fahrzeug montiert ist.

5. Reifen (10) nach einem der Ansprüche 1 bis 4, wobei eine Querschnittsform des längs verlaufenden Vorsprungsabschnitts (110) entlang der Reifenumfangsrichtung halbkreisförmig ist.

6. Reifen (10) nach einem der vorhergehenden Ansprüche, ferner Folgendes umfassend:
Umfangsrippen (120, 130), die ringförmige Vorsprünge sind, die sich entlang der Reifenumfangsrichtung erstrecken, und
eine Verbindungsrippe (200), die mit einem oder mehreren der längs verlaufenden Vorsprungsabschnitte (110) verbunden ist.

## Revendications

1. Pneumatique (10) incluant une bande de roulement (20) entrant en contact avec la surface de route et une partie latérale de pneu (30) continue à la bande de roulement et positionnée à l'intérieur d'une direction radiale de pneu de la bande de roulement, comprenant :
une nappe ceinture (50) fournie à l'intérieur de la bande de roulement dans la direction radiale du pneumatique ;
une carcasse (40) fournie à l'intérieur de la nappe ceinture dans la direction radiale du pneumatique, dans lequel
une partie de saillie longitudinale (110) s'étendant le long de la direction radiale du pneumatique et faisant saillie à l'extérieur d'une surface de la partie latérale du pneumatique vers un extérieur d'une direction de la largeur du pneumatique ;
160 à 220 des parties de saillies longitudinales sont fournies le long d'une direction circonférentielle du pneumatique ;
une extrémité intérieure (110a) dans la direction radiale du pneumatique de la partie de saillie longitudinale est située à l'extérieur, dans la direction radiale du pneumatique, d'une position maximale en largeur (Wmax) de la partie latérale du pneumatique dans la direction de la largeur du pneumatique ;
une extrémité extérieure (110b) dans la direction radiale du pneumatique de la partie de saillie longitudinale est positionnée à l'extérieur, dans la direction radiale du pneumatique, d'une deuxième ligne droite (L2) orthogonale à une première ligne droite (L1) passant à travers une extrémité extérieure dans la direction de la largeur du pneumatique de la nappe ceinture et parallèle à la direction radiale du pneumatique,
la deuxième ligne droite est orthogonale à la première ligne droite à une position où la première ligne droite entre en contact avec une extrémité extérieure dans la direction radiale du pneumatique de la carcasse ; et
l'extrémité extérieure dans la direction radiale du pneumatique de la partie de saillie longitudinale est positionnée à l'intérieur de la direction radiale du pneumatique d'une extrémité de mise à la terre d'une surface au sol (TW) dans la direction de la largeur du pneumatique de la bande de roulement.

2. Pneumatique (10) selon la revendication 1, dans lequel la nappe ceinture (50) inclut une première ceinture de croisement (51) et une deuxième ceinture de croisement (52) fournie à l'extérieur de la première ceinture de croisement dans la direction radiale du pneumatique, et
l'extrémité extérieure (110b) dans la direction radiale du pneumatique de la partie de saillie longitudinale (110) est située à l'extérieur de la direction radiale du pneumatique qu'une extrémité intérieure dans la direction radiale du pneumatique de la première ceinture de croisement.

3. Pneumatique (10) selon les revendications 1 ou 2, dans lequel le pneumatique comprend une partie de renflement (35) située à l'extérieur de la position maximale en largeur (Wmax) dans la direction radiale du pneumatique, dans lequel la partie de renflement correspond à une position de division (300a) d'un moule (300) pour mouler le pneumatique, le moule comprenant une pluralité d'anneaux de bande de roulement (310) et un moule latéral (320), dans lequel la pluralité d'anneaux de bande de roulement sont fournis le long de la direction circonférentielle du pneumatique et le moule latéral est un moule annulaire, dans lequel le moule est divisé en au moins un de la pluralité d'anneaux de bande de roulement et le moule latéral à la position de division.

4. Pneumatique (10) selon l'une quelconque des revendications 1 à 3, dans lequel la partie de saillie longitudinale (110) est fournie uniquement sur la partie latérale du pneumatique intérieure (30) lorsque le pneumatique est monté sur un véhicule.

5. Pneumatique (10) selon l'une quelconque des revendications 1 à 4, dans lequel une forme de section transversale de la partie de saillie longitudinale (110) le long de la direction circonférentielle du pneumatique est semi-circulaire.

6. Pneumatique (10) selon l'une quelconque des revendications précédentes, comprenant en outre :
des nervures circonférentielles (120, 130) qui sont des saillies annulaires s'étendant le long de la direction circonférentielle du pneumatique, et
une nervure de communication (200) communicant avec une ou plusieurs des parties de saillies longitudinales (110).
